## Europäisches Patentamt

## European Patent Office

## Office européen des brevets

(19)

(11) Veröffentlichungsnummer: **0 093 360**
**B1**

(12)

# EUROPÄISCHE PATENTSCHRIFT

(45) Veröffentlichungstag der Patentschrift:
23.07.86

(21) Anmeldenummer: 83104003.5

(22) Anmeldetag: 23.04.83

(51) Int. Cl.⁴: **F 16 K 11/06,** F 15 B 13/042

(54) **Wegeventil, das für unterschiedliche Betriebsarten vorgesehen ist.**

(30) Priorität: 05.05.82 DE 3216809

(43) Veröffentlichungstag der Anmeldung:
09.11.83 Patentblatt 83/45

(45) Bekanntmachung des Hinweises auf die Patenterteilung:
23.07.86 Patentblatt 86/30

(84) Benannte Vertragsstaaten:
CH DE FR GB IT LI

(56) Entgegenhaltungen:
DE-A-1 775 604
DE-A-1 917 598
DE-A-2 206 766
DE-A-2 832 967
FR-A-2 257 837
FR-A-2 339 115
GB-A-1 152 472

(73) Patentinhaber: **ROBERT BOSCH GMBH, Postfach 50, D-7000 Stuttgart 1 (DE)**

(72) Erfinder: **Mayer, Günter, Mittleres Gässle 13, D-7141 Murr (DE)**
Erfinder: **Schock, Manfred, Dipl.- Ing., Neuhalde 26, D-7140 Ludwigsburg (DE)**

## Beschreibung

### Stand der Technik

Die Erfindung geht aus von einem Wegeventil, das für unterschiedliche Betriebsarten vorgesehen ist, nach der Gattung des Hauptanspruchs.

Es ist schon ein solches Wegeventil aus der DE-A-19 17 598 bekannt, bei der die an den Stirnseiten des Gehäuses angeordneten Deckel nur die austauschbaren Dichtungen sowie zugeordnete Abdeckplatten aufnehmen, während die Antriebskolben für den Steuerschieber im Gehäuse geführt sind. Obwohl hier in vorteilhafter Weise unterschiedliche Betriebsarten möglich sind, hat dieses Wegeventil doch den Nachteil, daß es relativ voluminös und aufwendig baut. So führt die in Längsrichtung des Steuerschiebers gesehen hintereinander liegende Anordnung von Antriebskolben, Abdeckscheibe, Dischtscheibe und Aussparungen im Deckel zu einer langen Bauart des Wegeventiles. Abgesehen vom Aufwand erfordert die Ausbildung der Dichtung als Flachdichtung relativ große Anpreßkräfte für den Deckel an der Stirnseite des Gehäuses. Ferner müssen für die in die Stirnseite des Gehäuses mündenden Kanäle zusätzlich Dichtelemente vorgesehen werden. Außerdem sind für die Antriebskolben im Gehäuse zusätzliche Buchsen notwendig. Die Montage des relativ aufwendig bauenden Wegeventils gestaltet sich somit schwierig. Weiterhin sind die Flachdichtungen jeweils nur für eine Einbaulage vorgesehen, so daß ihnen keine Schaltfunktion zukommt.

Ferner ist aus der DE-A- 1 775 604 ein Wegeventil für unterschiedliche Betriebsarten bekannt, dessen den Steuerschieber aufnehmendes Gehäuse auf eine Grundplatte geflanscht ist und an seinen Stirnseiten jeweils einen Deckel trägt. Zur Abdichtung zwischen Gehäuse und Deckel ist eine Flachdichtung vorgesehen, die auf ihrer dem Deckel zugewandten Seite mit Dichtrippen und auf ihrer dem Gehäuse zugewandten Seite mit zapfenartigen Ausformungen versehen ist. Um hier Steuerfluidverbindungen herzustellen, können sclche zapfenartigen Ausformungen an der Dichtung abgeschnitten werden. Von Nachteil ist nun, daß unterschiedliche Betriebsarten nur durch nachträgliche Bearbeitung der Dichtung möglich sind. Zudem baut diese Flachdichtung nicht nur aufwendig, sondern erfordert auch hohe Anpreßkräfte des Deckels am Gehäuse. Unterschiedliche Montagestellungen der Dichtung sind hier nicht vorgesehen. Von Nachteil ist ferner, daß für eine Betriebsart mit Federrückstellung ein vollkommen neuer Deckel notwendig wird. Auch eignet sich das Wegeventil nur für eine Bauart, bei welcher der Steuerschieber nicht von Antriebskolben mit größerem Durchmesser betätigt wird.·

Ferner ist aus der DE-A-2 206 766 ein Wegeventil bekannt, bei dem die Antriebskolben für den Steuerschieber in vorteilhafter Weise in Kunststoffbuchsen geführt sind. Dieses Wegeventil eignet sich jedoch nicht zur Umstellung auf unterschiedliche Betriebsarten.

Ferner ist aus der DE-A-2 832 967 ein Wegeventil bekannt, bei dem zwischen der Stirnseite eines Gehäuses und dem zugeordneten Deckel eine Dichtplatte liegt, die durch Drehen in unterschiedlichen Montagelagen einbaubar ist, um dadurch unterschiedliche Steuerdruckmittelverbindungen herzustellen. Dieses Wegeventil ist jedoch in Sitzventilbauart hergestellt, bei dem die Antriebskolben unmittelbar im Gehäuse liegen.

### Vorteile der Erfindung

Das erfindungsgemäße Wegeventil mit den kennzeichnenden Merkmalen des Hauptanspruchs hat demgegenüber den Vorteil, daß es bei kompakter, relativ einfacher Bauweise die Nachteile der vorbekannten Wegsventile vermeidet und deren Vorteile vereint. So begünstigt dis Anordnung des Antriebskolbens sowie die Ausbildung von Steuerausnehmungen in der im Deckel angeordneten Buchse nicht nur eine raumsparende Bauweise, sondern begünstigt auch die Verwendung einer hohen Dichtheitsanforderungen gerecht werdenden Rundschnurdichtung, die zudem durch unterschiedliche Montagelagen eine Schaltfunktion mit übernehmen kann. Dabei ergibt sich durch die besondere Ausbildung der Gehäusestirnfläche, der Rundschnurdichtung, der Buchse und des Deckels die Möglichkeit, mit Hilfe der zwei Einbaulagen der Rundschnurdichtung relativ in der Buchse sowie der zwei Montagelagen des Deckels relativ zum Gehäuse insgesamt vier sinnvolle Montagelagen zu erreichen. Allein durch Montagevariation können daher mit möglichst wenig gleichen Teilen eine Vielzahl von Steuerfunktionen realisiert werden. Dabei ist es besonders zweckmäßig, daß das Verschließen bzw. Öffnen von Steuerkanälen mit verhältnismäßig großem Querschnitt durchführbar ist. Durch die Ausbildung der Buchse als Kunststoffteil und des Deckels als Druckgußteil entfällt eine zusätzliche Bearbeitung dieser Teile. Die Buchse aus Kunststoff bietet eine optimale Lauffläche für den Antriebskolben und verursacht keine Dichtheitsproblems wie etwa Druckgußteile. Zudem lassen sich bei der Buchse aus Kunststoff kostengünstige Ausführungsvarianten herstellen. Der metallische Deckel schützt die Buchse aus Kunststoff gegen äußere, schädliche Einflüsse, insbesondere gegen Schweißspritzer bei Verwendung des Wegeventils in Schweißmaschinen. Ferner ermöglicht die Kunststoff-Buchse innen eine glatte als Lauffläche dienende Oberfläche, da sie von außen her ausgsspart ist. Demgegenüber ist der Aluminium-Deckel von innen her ausgespart und hat außen eine glatte, schmutzunempfindliche Oberfläche.

Durch die in den Unteransprüchen aufgeführten Maßnahmen sind vorteilhafte Weiterbildungen und Verbesserungen des im Hauptanspruch angegebenen Wegeventiles möglich. Insbesondere begünstigen sie eine raumsparende und billige Lösung, die trotz ihrer vielfältigen Anwendungsmöglichkeiten auch montagefreundlich ist.

## Zeichnung

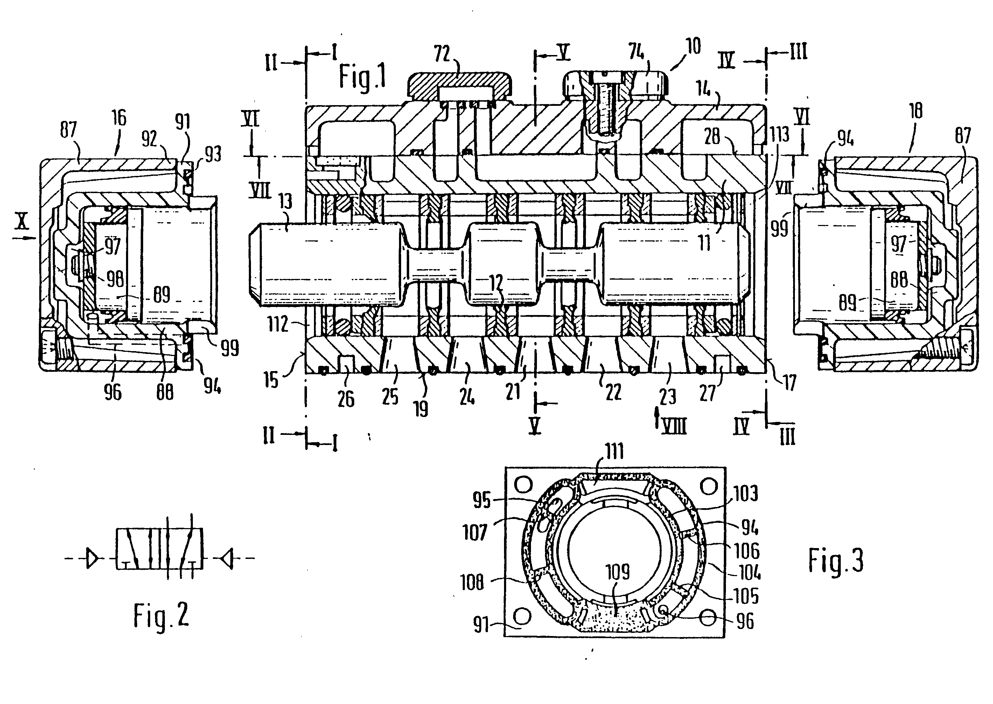

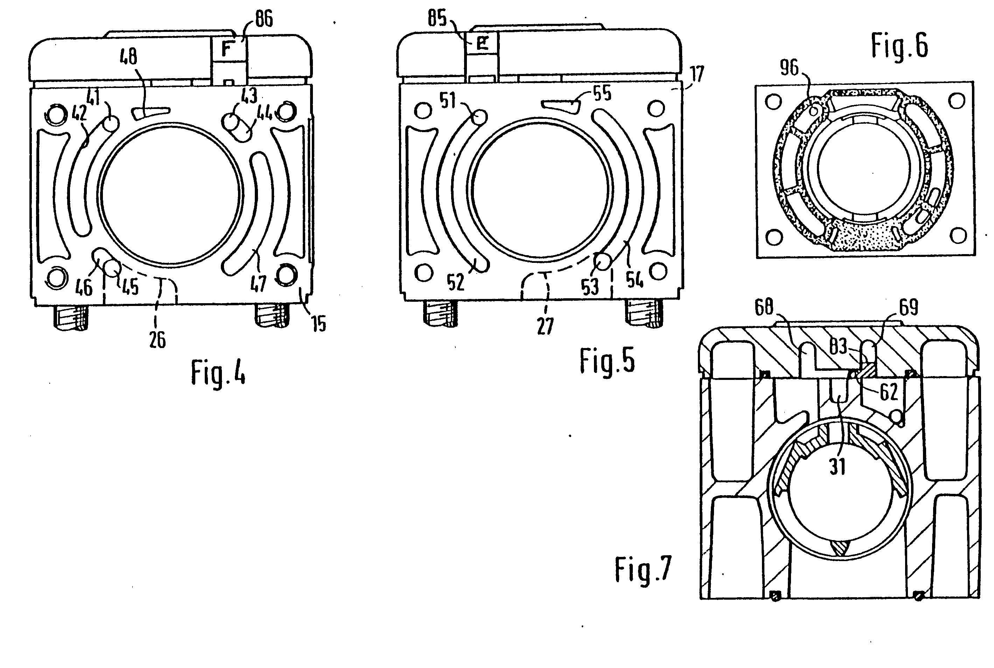

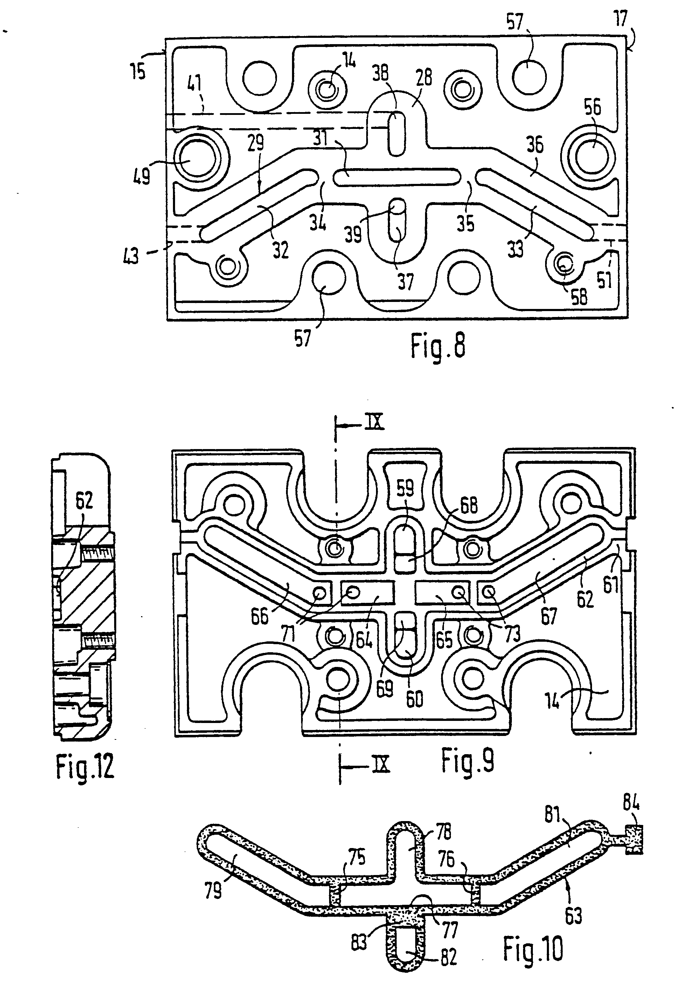

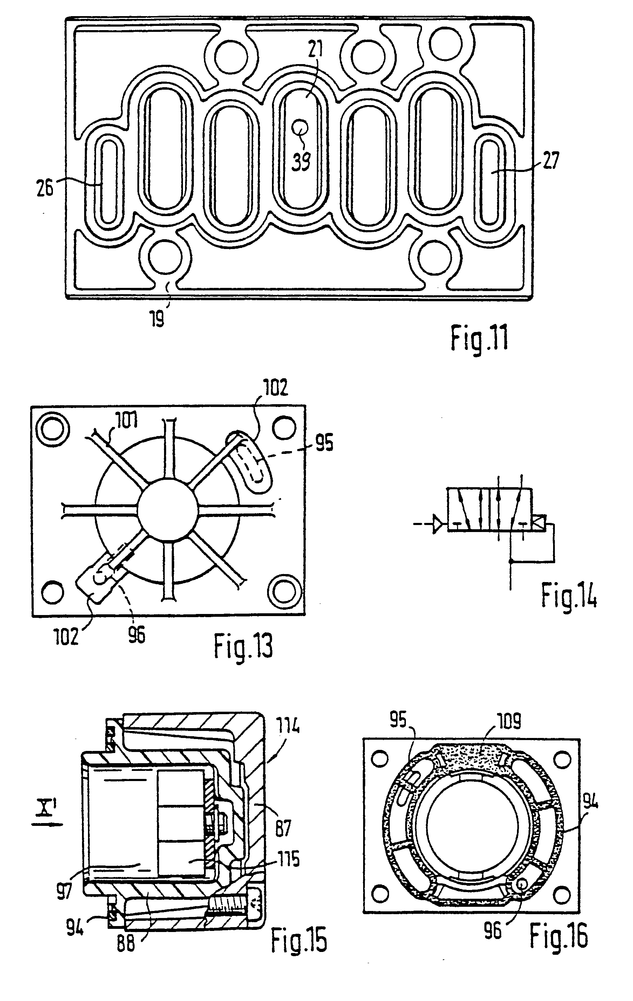

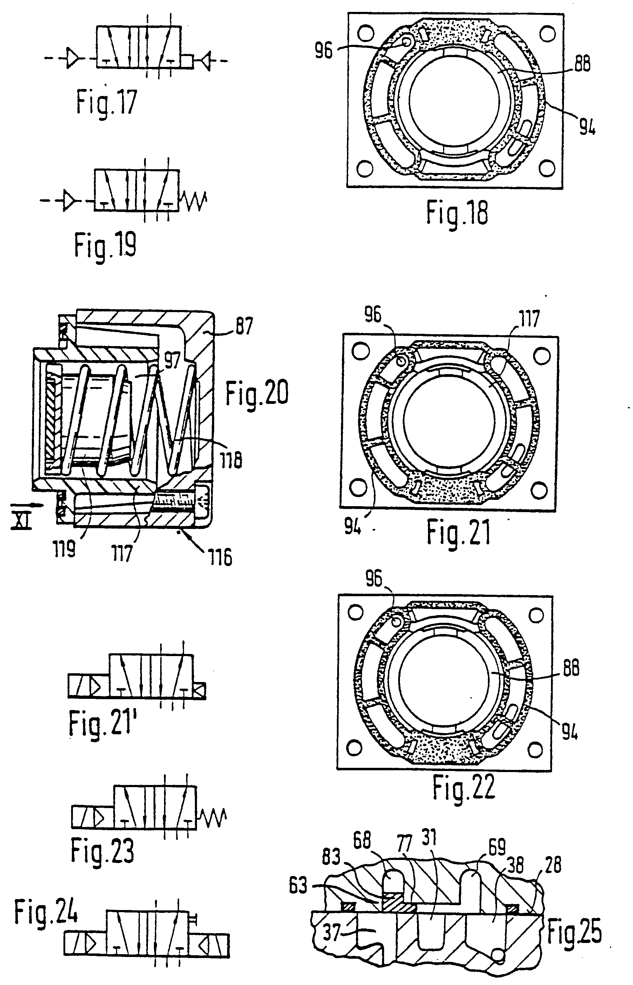

Ausführungsbeispiele der Erfindung sind in der Zeichnung dargestellt und in der nachfolgenden Beschreibung näher erläutert. Es zeigen Figur 1 einen Längsschnitt durch ein Wegeventil in einer Ausführung als Impulsventil mit gleich großen Kolbenflächen, Figur 2 das zugehörige Schaltsymbol des Wegeventiles nach Figur 1, Figur 3 einen Qusrschnitt nach I-I in Figur 1 mit in der Buchse eingelegter Rundschnurdichtung, Figur 4 einen Querschnitt nach II-II in Figur 1, Figur 5 einen Querschnitt gemäß III-III in Figur 1, Figur 6 einen Querschnitt gemäß IV-IV in Figur 1, Figur 7 einen Querschnitt nach V-V in Figur 1, Figur 8 einen Schnitt gemäß VI-VI in Figur 1 und somit eine Draufsicht auf das Gehäuse des Wegsventiles in Figur 1, Figur 9 einen Schnitt gemäß VII-VII in Figur 1 und somit eine Untersicht auf eine Steuerplatts des Wegeventils nach Figur 1, Figur 10 eine Ansicht einer aus der Steuerplatte nach Figur 9 herausgenommenen Rundschnurdichtung, Figur 11 eine Untersicht des Gehäuses des Wegeventils nach Figur 1 gemäß Pfeil VIII, Figur 12 einen Querschnitt durch die Steuerplatte nach IX-IX in Figur 9, Figur 13 eine Ansicht der in den Deckel eingesetzten Kunststoff-Buchse nach Pfeil X in Figur 1, die Figur 14 zeigt das Schaltsymbol eines zweiten Wegeventiles, das als Umschaltventil mit Luftrückstellung ausgebildet ist, Figur 15 zeigt den dementsprechend geänderten, rechten Deckel im Längsschnitt und Figur 16 die Seitenansicht dss Decksls nach Figur 15 in Richtung des Pfeiles X', die Figur 17 zeigt das Sinnbild einss dritten Wegeventiles, das als Impulsventil mit Differenzkolben ausgebildet ist und Figur 18 den zugehörigen Schnitt nach IV-IV, jedoch mit anderen und umgestellten Bauelementen, Figur 19 zeigt das Sinnbild eines vierten Wegeventiles, das als Unschaltventil mit Federrücksteilung ausgebildet ist, Figur 20 den zugehörigen, rechten Deckel für Fedsrrückstellung und Figur 21 den Deckel nach Figur 20 in Richtung des Pfeiles XI, die Figur 21' zeigt das Sinnbild eines fünften Wegeventils, das als Magnetventil mit Luftruckstellung ausgebildet ist und Figur 22 den zugehörigen Schnitt nach I-I in Figur 1, jedoch mit umgestellten Bauelementen, die Figur 23 zeigt das Sinnbild für ein sechstes Wegsventil, das als Magnetventil mit Federrückstellung ausgebildet ist und Figur 24 ein siebtes Wegeventil, das als Magnetimpulsventil ausgeführt ist, die Figur 25 zeigt einen Teilschnitt durch das Gehäuse mit angeflanschter Steuerplatte entsprechend Figur 7, jedoch mit verdrehter Montagelage der Rundschnurdichtung für externe Steuerluftversorgung.

## Beschreibung der Ausführungsbeispiele

Die Figur 1 zeigt ein Wegeventil 10 im Längsschnitt, das als Impulsventil mit gleichen Kolbenflächen ausgebildet ist. Das 5/2-Wegeventil hat ein Gehäuse 11, das in einer mehrteiligen Schieberbuchse 12 einen längsbeweglichen Steuerschieber 13 aufnimmt. Das Gehäuse 11 ist oben durch eine Steuerplatte 14, an seiner linken Stirnfläche 15 durch eine erste Deckeleinheit 16 und an seiner rechten Stirnfläche 17 durch eine zweite Deckeleinheit 18 verschlossen. Die Deckeleinheiten 16, 18 sind - zum besseren Verständnis - vom Gehäuse 11 getrennt gezeichnet. Das Gehäuse 11 weist an einer der Steuerplatte 14 entgegengesetzt liegenden Grundfläche 19 fünf Arbeitsanschlüsse für die Zuluft (21), für einen Verbraucher (22, 24) sowie für die Abluft (23, 25) und fernerhin einen ersten und einen zweiten Steueranschluß 26, 27 auf. Diese Anschlüsse 21 bis 27 sind entsprechend der ISO-Norm ausgebildet, wie dies Figur 11 näher zeigt.

In der von der Steuerplatte 14 abgedeckten Steuerfläche 28 des Gehäuses 11 verläuft von der linken Stirnfläche 15 zur rechten Stirnfläche 17 ein etwa U-förmiger Steuerkanal 29. (siehe Figur 8). Den Bodenabschnitt dieses U-förmigen Steuerkanals 29 bildet eine mittig liegende und parallel zur Längsachse des Steuerschiebers verlaufende Längsnut 31, an die sich nach außen hin die die Schenkel des U bildenden Schrägnuten 32 und 33 anschließen. Die die Schenkel bildenden Schrägnuten 32, 33 sind hierbei stark nach außen gebogen und durch Stege 34, 35 in einer Dichtungsfläche 36 von der Längsnut 31 getrennt. Ferner liegen in der Dichtungsebene 36 diametral zur Längsnut 31 und von dieser getrennt eine erste Quernut 37 sowie eine zweite Quernut 38. Von der ersten Quernut 37 führt eine Bohrung 39 zum Arbeitsanschluß 21 für die Zuluft. Von der zweiten Quernut 38 führt eine erste Längsbohrung 41 in die linke Stirnfläche 15 und mündet dort in eine erste Bogennut 42, die sich etwa über ein Fünftel des Kreisumfanges erstreckt, wie dies näher aus Figur 4 ersichtlich ist. Ferner führt vom Ende der ersten Schrägnut 32 eine zweite Längsbohrung 43 in eine zweite Bogennut 44 an der Stirnseite 15. Wie ferner aus Figur 4 ersichtlich ist, verbindet eine dritte Längsbohrung 45 den ersten Steueranschluß 26 mit einer dritten Bogennut 46 in derselben Stirnfläche 15. Außerdem verläuft in der linken Stirnfläche 15 diametral zur ersten Bogennut 42 eine vierte Bogennut 47, die wie die anderen Bogennuten 42, 44, 46 auf demselben Durchmesser liegt. Zudem liegen alle drei Längsbohrungen 41, 43, 45 auf den Ecken sines Rechtecks und damit zugleich auf dem erwähnten Durchmesser. Im Bereich zwischen der ersten und der dritten Längsbohrung 41 bzw. 43 liegt auf demselben Durchmesser eine nierenförmige Öffnung 48, die mit einer Entlüftungs-Öffnung 49 in der Steuerfläche 28 in Verbindung steht, wie dies aus Figur 1 und 8 erkennbar ist. Sämtliche Bogennuten 42, 44, 46, 47 sowie die Öffnung 48 sind in der Stirnfläche 15 durch Materialstege voneinander getrennt.

Wie die Figur 8 in Verbindung mit der Figur 5 näher zeigt, führt von der zweiten Schrägnut 33 eine fünfte Längsbohrung 51 in die rechte Stirnfläche 17, wo sie in eine fünfte Bogennut 52 mündet. Die fünfte Längsbohrung 51 liegt koaxial zur zweiten Längsbohrung 43. Vom zweiten Steueranschluß 27 führt in entsprechender Weise eine sechste Längsbohrung 53 in eine sechste Bogennut 54 in der Stirnfläche 17, wobei die sechste Längsbohrung 53 koaxial zur dritten Längsbohrung 45 liegt. In der Stirnfläche 17 liegt zwischen den beiden Bogennuten 52 und 54 eine zweite nierenförmige Öffnung 55, die in entsprechender Weise mit einer Entlüftungs-Öffnung 56 in der Steuerebene 28 in Verbindung steht. In der zweiten Stirnfläche 17 liegen die Bogennuten 52, 54 sowie die Öffnung 55 auf demselben Durchmesser wie die Bogennuten an der anderen Stirnfläche 15, wobei die Längsbohrungen 51 und 53 sowie deren zugeordneten Bogennuten 52 bzw. 54 diametral zueinander angeordnet sind. Die fünfte Bogennut 52 erstreckt sich über einen Umfangsabschnitt, in dem in der linken Stirnfläche 15 die erste Bogennut 42 und die dritte Bogennut 46 zusammen verlaufen. Entsprechendes gilt für die sechste Bogennut 54. Wie die Figur 8 näher zeigt, liegen die Entlüftungs-Öffnungen 49 und 56 in dersslben Längsebene im Gehäuse 11. In Figur 8 sind ferner vier Durchgangsbohrungen 57 für die Schrauben zum Befestigen des Ventils 10 auf einer nicht näher gezeichneten Grundplatte sowie vier Gewindelöcher 58 zum Festschrauben der Steuerplatte 14 erkennbar.

Die Figur 9 zeigt in Verbindung mit den Figuren 1, 7 und 12 näher die Bauweise der Steuerplatte 14. Dabei ist in Figur 9 in der als Druckgußteil ausgebildeten Steuerplatte 14 ein Materialsteg 61 erkennbar, dessen Form der Dichtungsfläche 36 am Gehäuse 11 angepaßt ist. In diesem Materialsteg 61 ist gegenüber der Steuerfläche 28 eine Aufnahmefläche 62 abgesetzt, in die eine vorgeformte Rundschnurdichtung 63 nach Figur 10 einlegbar ist. Im Bereich der Aufnahmefläche 62 sind insgesamt sechs Erhebungen 64, 65, 66, 67, 59, 60 sowie zwei Vertiefungen 68, 69 ausgebildet, deren Verlauf und Lage den Nuten 31, 32, 33, 37, 38 in der Dichtfläche 36 des Gehäuses 11 entsprechen. Die Erhebungen 64 bis 67, 59, 60 ragen bis in die Steuerebene 28 und sorgen für eine einwandfreie Kammerung der Rundschnurdichtung 63. So liegen eine erste (64) und eine zweite Erhebung 65 der Längsnut 3l gegenüber, die dritte Erhebung 66 der ersten Schrägnut 32 sowie die vierte Erhebung 67 der zweiten Schrägnut 33. Die erste Vertiefung 68 und die fünfte Erhebung 59 sind der ersten Quernut 37 und die zweite Vertiefung 69 mit der sechsten Erhebung 60 der zweiten Quernut 38 zugeordnet. Die erste (64) und die dritte Erhebung 66 sind über ein Bohrungspaar 71 und einen angeschraubten Kanaldeckel 72 miteinander verbindbar. Eine entsprechende Verbindung zwischen der zweiten (65) und der vierten Erhebung 67 ermöglicht ein Bohrungspaar 73 mit zugeordnetem Kanaldeckel 74.

Die Figur 10 zeigt die aus der Steuerplatte 14 herausgenommene, vorgeformte Rundschnurdichtung 63. Ihr Rundmaterial umschließt im wesentlichen die Form zweier sich mittig kreuzender Balken, wobei die Enden des längeren Querbalkens nach der gleichen Seite hin abgewinkelt sind entsprechend dem Verlauf der Schrägnuten 32 und 33 in dem Gehäuse 11. Zwei zueinander parallele Dichtschnurstege 75 und 76 sowie ein im Kreuzungspunkt der Balken liegender Längsschnursteg 77 trennen in der Rundschnurdichtung eine P-Kammer 78 von zwei äußeren, abgewinkelt liegenden Endkammern 79, 81 und von einer Querkammer 82. Ferner ist im Bereich der Querkammer 82 an dem Längsschnursteg 77 ein Sicherungsnoppen 83 (siehe Figur 7) angeformt, der in die zweite Vertiefung 69 der Steuerplatte 14 greift und dabei bei Druckbsaufschlagung ein Herausdrücken des Längsschnurstegs 77 verhindert. Ferner ist an der Rundschnurdichtung 63 an einem Ende des langen Balkens ein Anzeigenocken 84 angeformt, der im Bereich der Steuerfläche 28 zwischen Gehäuse 11 und Steuerplatte 14 herausragt und zusammen mit einer Marke 85 an der Steuerplatte 14 die Eigenluftversorgung für die Steuerseite anzeigt. Die Rundschnurdichtung 63 ist soweit symmetrisch ausgebildet, daß sie aus der in Figur 10 gezeigten Lage in der Zeichenebene um 180° gedreht und so in einer zweiten Montagelage in die Aufnahmefläche 62 der Steuerplatte 14 einsetzbar ist, wobei der Sicherungsnocken 83 in die Vertiefung 68 zu liegen kommt. Der Anzeigenocken 84 liegt in dieser zweiten Montagelage der Rundschnurdichtung 63 bei einer Marke 86 für Fremdluftversorgung, die in Figur 4 erkennbar ist. Da die gesamte Dichtung 63 aus Rundschnurmaterial besteht, können die nach einer Richtung vorgeformten, abgewinkelten Enden ohne weiteres in entgegengesetzter Richtung abgewinkelt werden und in die Aufnahmefläche 62 eingeführt werden.

Die am Gehäuse 11 an der linken Stirnfläche 15 angeflanschte, erste Deckeleinheit 16 wird anhand von Figur 1 und Figur 3 erläutert. Sie besteht im wesentlichen aus einen als Aluminium-Druckgußteil ausgebildeten, äußeren Deckel 87 der in seinem Innern eine als Kunststoffteil ausgebildete Buchse 88 aufnimmt, in welcher ein Antriebskolben 89 für den Steuerschieber 13 dicht und gleitend geführt ist. Die Buchse 88 ist im wesentlichen becherförmig ausgebildet und weist nahe ihrem offenen Ends einen Flansch 91 auf, auf dessen einer Seite sich der Deckel 87 mit seinem Rand 92 abstützt. Auf der anderen Seite des Flansches 91, die der Stirnfläche 15 des Gehäuses 11 zugewandt ist, sind Rillen 93 zur Aufnahme einer ringformigen Rundschnurdichtung 94 eingeformt. Auf demselben Durchmesser wie die Bogennuten im Gehäuse 11 liegen in der Buchse 88 zur Rundschnurdichtung hin offen sine bogenförmige Nut 95 sowie die Öffnung eines Steuerkanals 96, wie dies aus Figur 3 und Figur 13 erkennbar ist. Die bogenförmige Nut 95 ist nach Lage und Größe so ausgebildet, daß sie abhängig von der Montagelage der Deckeleinheit 16 am Gehäuse 11 eine Verbindung zwischen der ersten (42) und der dritten Bogennut 46 oder aber eine Verbindung zwischen der zweiten Bogennut 44 und der vierten Bogennut 47 herstellen kann. Die Öffnung des Steuerkanals 96 liegt im Flansch 91 der Nut 95 im wesentlichen diametral gegenüber. Der Steuerkanal 96 mündet mit seinem von dem Flansch 91 entgegengesetzten Ende in einen Druckraum 97 der zwischen dem Antriebskolben 89 und einem Boden der becherförmig ausgebildeten Buchse 88 liegt. Ferner weist die Buchse 88 von ihrem offenen Ende bis in den Dichtungsbereich der Rundschnurdichtung 94 reichende Längsnuten 99 auf, weiche zur Entlüftung der rückwärtigen Seite des Antriebskolbens 89 dienen. Wie aus Figur 1 und Figur 13 näher erkennbar ist, weist die becherförmige Buchse 88 außen radial verlaufende Versteifungsrippen 101 auf und hat im Bereich des Steuerkanals 96 und der bogenförmigen Nut 95 unsymmetrisch ausgebildete Materialansammlungen 102, so daß die Buchse 86 nur in einer einzigen Lage in den Deckel 87 einsetzbar ist. Andererseits ist der Deckel 87 mit eingelegter Buchse 88 so rotationssymmetrisch zur Längsachse des Steuerschiebers 13 ausgebildet, daß er in zwei, zueinander um 180° verdrehten Einbaulagen, am Gehäuse 11 montierbar ist.

Die Figur 3 zeigt die in den Flansch 91 eingelegte Rundschnurdichtung 94, die im wesentlichen aus zwei konzentrisch zueinander liegenden, im wesentlichen kreisförmigen Schnurringen 103 und 104 besteht, die durch vier radial verlaufende Schnurstege 105 bis 108 sowie einem dazwischenliegenden Flachsteg 109 voneinander in Abstand gehalten werden und bei welcher der innere Schnurring 103 in einem dem Flachsteg 109 diametral gegenüberliegendem Bereich zur Steuerung einer Entlüftung unterbrochen ist. Am Flansch 91 sind diametral gegenüberliegend mit dem Flachsteg 109 zusammenwirkende Erhebungen 111 ausgebildet, so daß die ringförmige Rundschnurdichtung 94 nur seitenrichtig in die Rillen 93 eingelegt werden kann. Die Lage der diametral einander gegenüberliegenden Schnurstege 105 und 107 ist so gewählt, daß sie in jeder Montagelage in der Stirnfläche 15 zwischen den Bogennuten 42 und 46 bzw. 44 und 47 zu liegen kommen, während die Nut 107 die betreffende Dichtstelle überbrückt. Fernerhin ist die Rundschnurdichtung 94 so groß ausgebildet, daß der innere Schnurring 103 gerade den Außendurchmesser der Buchse 88 umspannt. Der Abstand zwischen den Schnurringen 103 und 104 ist so groß gewählt, daß die auf dem gleichen Durchmesser liegenden Öffnungen und Bogennuten sowohl in der Stirnseite 15 wie auch im Flansch 91 der Buchse 88 in der jeweils gewünschten Weise voneinander abgedichtet oder miteinander verbunden wird. Außerdem ist die Rundschnurdichtung 94 insoweit rotationssymmetrisch ausgebildet, daß sie aus der in Figur 3 gezeichneten Lage um 180 gedreht in die Rillen 93 des Flansches 91 einlegbar ist, wobei der Flachsteg 91 oben zu liegen kommt.

Die rechte Deckeleinheit 18 besteht aus denselben Teilen wie die linke Deckeleinheit 16, nämlich aus dem äußeren Deckel 87 aus Druckguß, der inneren Buchse 88 aus Kunststoff, dem darin angeordneten Arbeitskolben 89 sowie der ringförmigen Rundschnurdichtung 94. Wie Figur 6 näher zeigt, ist der Deckel 87 mit Buchse 88 um 180° verdreht in einer zweiten Einbaulage montiert, während die Rundschnurdichtung 94 dieselbe Lage wie in Figur 3 beibehält.

Die Wirkungsweise des Wegeventiles 10 wird wie folgt erläutert: Wie aus Figur 2 hervorgeht, arbeitet das Wegeventil 10 als ein Impulsventil mit gleichen Kolbenflächen an den Arbeitskolben. 89. Soll der Steuerschieber 13 aus der in Figur 1 gezeichneten, linken Stellung nach rechts bewegt werden, so wird in den ersten Steueranschluß 26 ein Druckluftimpuls eingegeben. Dieser gelangt durch die dritte Längsbohrung 45 in die dritte Bogennut 46, die von der ringförmigen Rundschnurdichtung 94 in der linken Stirnfläche 15 dicht umschlossen ist und unmittelbar über den Steuerkanal 96 in der Büchse 88 in den Druckraum 97. Die Druckluft schiebt den Arbeitskolben 89 in der ersten Deckeleinheit 16 zusammen mit dem Steuerschieber 13 nach rechts. Ein hinter dem Arbeitskolben 89 liegender, an den Steuerschieber 13 grenzender Ringraum 112 ist hierbei über die oben liegende Längsnut 99, die Unterbrechung in dem inneren Schnurring 103 der ringförmigen Rundschnurdichtung 94, die nierenförmige Öffnung 48 in der linken Stirnfläche 15 und die Entlüftungs-Öffnung 49 zur Außenluft entlastet. Bei dieser Rechtsbewegung des Steuerschiebers 13 wird vom Arbeitskolben 89 in der zweiten Deckeleinheit 18 über die entsprechende Verbindung (56, 55, 99) Außenluft in einen entsprechenden Ringraum 113 nachgesaugt. Zugleich ist der Druckraum 97 in der zweiten Deckeleinheit 18 über den Steuerkanal 96 in der Buchse 88 und die in der Stirnfläche 17 verlaufende, von der Rundschnurdichtung 94 abgedichtete sechste Bogennut 54 zur sechsten Längsbohrung 53 und zum zweiten Steueranschluß 27 entlüftet. Bei einem Umsteuern des Steuerschiebers 13 aus einer rechten Endstellung in seine linke Endstellung wird in entsprechend umgekehrter Weise der Steuerimpuls in den zweiten Steueranschluß 27 gegeben, während der erste Steueranschluß 26 entlüftet ist. Der Steuerschieber 13 kann somit die üblichen Verbindungen eines 5/2-Wegeventils herstellen, wie dies Figur 2 vereinfacht zeigt.

Soll nun das Wegeventil 10 als Umschaltventil mit Luftrückstellung betrieben werden, wie dies in vereinfachter Darstellung Figur 14 zeigt, so bleibt am Gehäuse 11 die linke Deckeleinheit 16 unverändert, während anstelle der zweiten Deckeleinheit 18 nach Figur 1 eine zweite Deckeleinheit 114 nach Figur 15 verwendet wird. Die Deckeleinheit 114 unterscheidet sich von derjenigen nach Figur 1 vor allem dadurch, daß anstelle des Antriebskolbens 89 ein Distanzstück 115 in die Buchse 88 eingesetzt ist. Der Deckel 87, die Buchse 88 und die Rundschnurdichtung 94 bleiben unverändert, sind jedoch zusammen um 180˙ um ihre Längsachse gedreht an der rechten Stirnfläche 17 montiert. Dies ist aus Figur 16 im Vergleich zu Figur 6 näher erkennbar, in der nun die Rundschnurdichtung 94 mit ihrem Flachsteg 109 oben liegt, während der Steuerkanal 96 in der Buchse 88 unten zu liegen kommt. Auf diese Weise ist der Druckraum 97 in der zweiten Deckeleinheit 114 nun ständig mit dem Arbeitsanschluß 21 für die Zuluft verbunden. Im einzelnen gelangt die Zuluft vom Arbeitsanschluß 21 über die erste Bohrung 39 (siehe Figur 8) in die erste Quernut 37 und damit weiter über die T-förmige Kammer 78 der Rundschnurdichtung 63 in die Längsnut 31 der Steuerfläche 28, wie dies auch aus Figur 7 ersichtlich ist. Der hierbei auf den Längsschnursteg 77 wirkende Druck wird über den angeformten Sicherungsnocken 83, der in die zweite Vertiefung 69 der Steuerplatte 14 ragt, auf die Steuerplatte übertragen, so daß eine einwandfreie Abdichtung der Längsnut 31 und der ersten Quernut 37 gewährleistet ist. Von der ersten Längsnut 31 gelangt die Druckluft über eine offene Verbindung in dem Kanaldeckel 74 in die zweite Schrägnut 33 und weiter in die fünfte Längsbohrung 51. Wie Figur 5 näher zeigt, kann von dort die Druckluft in der fünften Bogennut 52 nach unten strömen, wo sie durch die Rundschnurdichtung 94 hindurch in dsn Steuerkanal 96 und weiter in den Druckraum 97 der zweiten Deckeleinheit 114 gelangt. Die Auslaßöffnung 55 ist durch sinen Abschnitt des inneren Schnurringes 103 im Bereich des Flachsteges 109 vom Druckraum 97 getrennt. Die Zuluft in der Längsnut 31 gelangt zwar über den ersten Kanaldeckel 72, die erste Schrägnut 32, die zweite Längsbohrung 43 die zweite Bogennut 44, und die nierenförmige Nut 95 in der Buchse 88 weiter in die vierte Bogennut 47 in der Stirnfläche 15, wo sie im übrigen durch die ringförmige Rundschnurdichtung 94 blockiert ist. Der Steuerschieber 13 des Wegeventiles 10 wird somit von einem Druckimpuls im ersten Steueranschluß 26 nach rechts in seine Endlage bewegt, wobei er am Distanzstück 115 zur Anlage kommt. Zugleich wirkt als Rückstellkraft auf den Steuerschieber 13 der Druck vom Arbeitsanschluß 21 ständig im Druckraum 97 der zweiten Deckeleinheit 114 und damit auf den Steuerschieber 13.

Wird nun das Wegeventil 10 als Impulsventil mit Differenzkolben betrieben, so wie dies in Figur 17 vereinfacht dargestellt ist, so verbleibt an der linken Stirnfläche 15 die erste Deckeleinheit 16 während an der rechten Stirnfläche 17 die zweite

Deckeleinheit 114 nach Figur 15 angeflanscht wird, wobei jedoch der Deckel 87 mit eingelegter Buchse 88 in Bezug auf Figur 16 um 180° zur Längsachse gedreht wird, die ringförmige Rundschnurdichtung 94 jedoch die in Figur 16 gezeichnete Lage beibehält, wie dies Figur 18 näher darstellt. Bei einer derartigen Montagelage von Buchse 88 und Rundschnurdichtung 94 wird die vom Arbeitsanschluß 21 für die Zuluft über die Kanäle der Steuerfläche 28 in die fünfte Bogennut 52 an der rechten Stirnfläche 17 gelangende Druckluft von der Rundschnurdichtung 94 blockiert, ebenso die nierenförmige Entlüftungs-Öffnung 55. Ein in den zweiten Steueranschluß 27 gegebener Impuls gelangt jedoch über die sechste Längsbohrung 53 in die sechste Bogennut 54 strömt dort in der rechten Stirnfläche 17 nach oben und gelangt über den Steuerkanal 96 in der Buchse 88 in den Druckraum 97 der zweiten Deckeleinheit 114. Der Steuerschieber 13 kann somit mittels Differenzkolben betrieben werden.

Wird nun das Wegeventil 10 als Umschaltventil mit Federrückstellung betrieben, wie dies Figur 19 in vereinfachter Form zeigt, so verbleibt am Gehäuss 11 die erste Deckeleinheit 16, während. an der rechten Stirnfläche 17 eine zweite Deckeleinheit 116 gemäß Figur 20 angeordnet wird. Die Deckeleinheit 116 unterscheidet sich von der zweiten Deckeleinheit 18 nach Figur 1 vor allem durch eine andere Buchse 117, an der lediglich der Boden 98 entfernt wurde, so daß die Buchse 117 eine Feder 118 mit einem zugeordneten Druckbolzen 119 für die Federrückstellung des Steuerschiebers 13 aufnehmen kann. Der Deckel 87 ist baugleich und so ausgebildet, daß die an ihm sich abstützende Feder 118 zentriert ist. Die Buchse 117 ist infolge ihrer gleichartigen Materialverdickungen 102 nur in einer bestimmten Lage in den Deckel 87 einsetzbar. Die Montagelage der Buchse 117 mit der eingelegten Rundschnurdichtung 94 zsigt Figur 21, wonach dis Stsusrluftvsrbindungen in der rechten Stirnfläche vergleichbar sind wie nach Figur 6. Der die Feder 118 aufnehmende Druckraum 97 wird über die Öffnungen 55 (Figur 5) und 56 entlüftet. Die Verbindung zum Anschluß 27 ist durch eine Kugel in Buchse 117 gesperrt. Der Steuerschieber 13 läßt sich somit durch einen Steuerimpuls im ersten Steueranschluß 26 gegen die Kraft der Feder 108 nach rechts auslenken, in eine Endstellung, aus der heraus die Feder 118 ihn bei fehlender Steuerluft in seine linke Endlage zurückführt.

Wird das Wegeventil 10 als Magnetventil mit Luftrückstellung betrieben, wie dies Figur 21′ vereinfacht zeigt, so müssen gegenüber Figur 1 folgende Änderungen vorgenommen werden. In der ersten Deckeleinheit 16 wird die Buchse 88 gegenüber Figur 3 um 180° gedreht, während die Rundschnurdichtung 94 ihre in Figur 3 gezeichnete Lags beibehält. An der Steuerplatte 14 wird der Kanaldeckel 72 durch ein nicht näher gezeichnetes, an sich bekanntes 3/2-Magnetventil ersetzt. Gemäß der Funktion für Luftrückstsllung des Steuerschiebers 13 wird an der rechten

rnfläche 17 des Gehäuses 11 die zweite Deckeleinheit 114 nach Figur 15 bzw. 16 angebaut. Bei geöffnetem Magnetventil kann somit Druckluft von dem Arbeitsanschluß 21 über die T-förmige Kammer 78 der Rundschnurdichtung 63 in die Längsnut 31 gelangen und weiter über das geöffnete Magnetventil in die erste Schrägnut 32, die zweite Längsbohrung 43 und den Steuerkanal 96 in der Buchse 88 in den Druckraum 97.

Die Figur 23 zeigt eine Betriebsart des Wegeventiles 10 als Magnetventil mit Federrückstellung, wobei die erste Deckeleinheit 16 in der in Figur 22 dargestellten Art am Gehäuse angeordnet wird, während auf der gegenüberliegenden Stirnfläche 17 die zweite Deckeleinheit 116 nach Figur 20 in der in Figur 21 gezeichneten Art am Gehäuse 11 angebaut wird.

Die Figur 24 zeigt als weitere Betriebsart des Wegeventile 10 in vereinfachter Darstellung ein Magnetimpulsventil, bei dem ausgehend von Figur 1 folgende Änderungen erforderlich sind: Die beiden Kanaldeckel 72 und 74 auf der Steuerplatte 14 müssen durch jeweils ein 3/2-Magnetventil ersetzt werden. An der linken Stirnfläche 15 wird die erste Deckeleinheit 16 so angeflanscht, daß die Buchse 88 und die Rundschnurdichtung 94 die in Figur 22 gezeichneten Montagestellungen einnehmen. An der rechten Stirnfläche 17 wird die zweite Deckeleinheit 18 angebaut, wobei jedoch die Buchse 88 und die Rundschnurdichtung 94 die in Figur 3 gezeichneten Montagestellungen einnehmen. Bei einem derartigen Zusammenbau kann das Wegeventil 10 dann als Magnetimpulsventil betrieben werden.

Die Figur 25 zeigt einen Teilschnitt nach Figur 7, wobei jedoch die in der Steuerfläche 28 liegende Rundschnurdichtung 63 in einer anderen Lage montiert ist, um hierdurch eine Fremdluftversorgung der Steuerseite zu erhalten. Diese Lage wird dadurch erreicht, indem die Rundschnurdichtung 63 nach Figur 10 in der Zeichenebene um 180° um eine lotrechte Achse durch den Kreuzungspunkt der von der Dichtung 63 umschlossenen Balken gedreht wird und so in die Aufnahmefläche 62 der Steuerplatte 14 gelegt wird, wobei der Sicherungsnocken 83 in die erste Vertiefung 68 der Steuerplatte greift. Nach anschließender Montage der Steuerplatte mit eingelegter Rundschnurdichtung 63 auf der Steuerfläche 28 des Gehäuses 11, ist dann durch die T-förmige Kammer 78 der Rundschnurdichtung 63 die zweite Quernut 38 mit der Längsnut 31 verbunden, während die erste Quernut 37 blockiert ist. Wie Figur 25 deutlich zeigt, verhindert der Sicherungsnocken 63 auch in diesem Fall, daß der Längsschnurstg 77 bei Druck in der Längsnut 31 aus seiner Lage gedrückt werden kann, so daß auch bei einer Montageweise für Fremdluftversorgung eine sichere Abdichtung gewährleistet ist. Bei der Montage der Rundschnurdichtung 63 in der Steuerplatte 14 in der für Fremdluftversorgung geeigneten Stellung, lassen sich die in die entgegengesetzte Richtung weisenden äußeren Schenkel der Rundschnurdichtung 63 ohne weiteres umbiegen und in die Aufnahmefläche 62 einfügen. Bei der in Figur 25 gezeichneten Einbaulage der Rundschnurdichtung 63 ragt der Anzeigenocken 84 dann bei der Marke 86 für Fremdluftversorgung aus dem Gehäuse heraus, was jedoch in der für Eigenluftversorgung vorgesehenen Figur 4 nicht dargestellt ist.

**Patentansprüche**

1. Wegeventil mit einem längsbeweglichen Steuerschieber (13) in einem Gehäuse (11), wobei die Impulse, welche den Steuerschieber (13) des Wegeventils betätigen, gemäß unterschiedlichen Betriebsarten zugeleitet werden können,
- und bei dem das Gehäuse (11) Längskanäle (41, 43, 45, 51, 53) aufweist, welche in Stirnflächen (15, 17) des Gehäuses (11) führen,
- und die Stirnflächen (15, 17) von Deckeln (16, 18) abgedeckt sind, welche mehrere Deckelkanäle (95, 96, 99) aufweisen,
- und mit wenigstens einem koaxial zum Steuerschieber (13) liegenden Antriebskolben (89), der in einer Buchse (88) geführt ist.
- sowie mit zwischen Gehäuse-Stirnflächen (15, 17) und Deckeln (16, 18) liegenden Dichtelementen (94), über deren Durchbrüche zwischen den Längskanälen (41, 43, 45, 51, 53) im Gehäuse (11) und den Deckelkanälen (95, 96, 99) Steuerverbindungen herstellbar sind, dadurch gekennzeichnet,
- daß die den Antriebskolben (89) aufnehmende Buchse (88) aus Kunststoff besteht und im Deckel (87) angeordnet ist,
- daß die Buchse (88) an ihrem Umfang einen an der Stirnfläche (15, 17) des Gehäuses (11) anliegenden Flansch (91) aufweist, in dem auf der dem Gehäuse (11) zugewandten Seite wenigstens eine Ausnehmung (95) und eine Öffnung (96) der Deckelkanäle liegen, von denen die Öffnung mit einem in der Buchse (88) liegenden Druckraum (97) Verbindung hat,
- daß im Gehäuse (11) die Längskanäle (41, 43, 45, 51, 53) mit nutenförmigen, in den Stirnflächen (15, 17) offen verlaufenden Kanälen (42, 44, 46, 52, 54) verbunden sind, daß diese offenen Kanäle (42, 44, 46, 52, 54) sowie die Ausnehmung (95) und die Öffnung (96) in der Buchse (88) auf demselben Durchmesser liegend angeordnet sind,
- und daß das Dichtelement eine ringförmige Rundschnurdichtung (94) ist, die so symmetrisch ausgebildet ist, daß sie durch unterschiedlichen Einbau in die Buchse (88) zwei Montagelagen ermöglicht.

2. Wegeventil nach Anspruch 1, dadurch gekennzeichnet die Buchse (88) im wesentlichen becherförmig ausgebildet ist und der Steuerkanal (96) nahe einem Boden (98) von der Buchse (88) begrenzten Druckraum (97) mündet.

3. Wegeventil nach Anspruch 1 oder 2, dadurch gekennzeichnet, daß die Öffnung des Steuerkanals (96) und die Ausnehmung (95) im Flansch (91) im wesentlichen diametral zur Längsachse der Buchse (88) angeordnet sind.

4. Wegeventil nach einem der Ansprüche 1 bis 3, dadurch gekennzeichnet, daß im Flansch (91) auf der dem Gehäuse (11) zugewandten Seite die Rundschnurdichtung (94) halternde Rillen (93) angeordnet sind.

5. Wegeventil nach einem der Ansprüche 1 bis 4, dadurch gekennzeichnet, daß die Buchse (88) durch asymmetrische Ausbildung (102) nur sine definierts Einbaulage im Deckel (87) aufweist.

6. Wegeventil nach einem der Ansprüche 1 bis 5, dadurch gekennzeichnet, daß der Deckel (87) becherförmig ausgebildet ist und mit seinem freien Rand (92) sich am Flansch (91) auf der dem Gehäuse (11) abgewandten Seite abstützt.

7. Wegeventil nach einem der Ansprüche 1 bis 6, dadurch gekennzeichnet, daß im Deckel (87) eine zentrische Aufnahme für eine Rückhol-Feder (118) ausgebildet ist.

8. Wegeventil nach einem der Ansprüche 1 bis 7, dadurch gekennzeichnet, daß der Deckel (87) so symmetrisch ausgebildet ist, daß er zwei Montagelagen am Gehäuse (11) ermöglicht.

9. Wegeventil nach einem der Ansprüche 1 bis 5, dadurch gekennzeichnet, daß die Buchse (88) auf der dem Gehäuse (15) zugewandten Seite eine Längsnut (99) für die Entlüftung aufweist, die mit dem Dichtungsbereich der Rundschnurdichtung (94) in Verbindung steht.

10. Wegeventil nach einem oder mehreren der vorhergehenden Ansprüche, dadurch gekennzeichnet, daß die Rundschnurdichtung (94) im wesentlichen aus zwei konzentrischen Schnurringen (103, 104) besteht, die durch radiale Stege (105-109) miteinander verbunden sind und von denen der innere Schnurring (103) zur Steuerung einer Entlüftung an einer Stelle unterbrochen ist.

11. Wegeventil nach Anspruch 10, dadurch gekennzeichnet, daß der innere Schnurring (103) die Buchse (88) an ihrem Außendurchmesser umfaßt und der Abstand zwischen den Schnurringen (103, 104) so gewählt ist, daß die auf demselben Durchmesser befindlichen Öffnungen und Ausnehmungen (41-48, 95, 96) in Buchse (88) und Gehäuse-Stirnseite (15) abgedichtet zwischen ihnen liegen bzw. in geeigneter Weise miteinander Verbindung haben.

12. Wegeventil nach Anspruch 10 oder 11, dadurch gekennzeichnet, daß in der Stirnfläche (15) des Gehäuses (11) auf dem Durchmesser wenigstens zwei durch einen Materialsteg voneinander getrennte, zur Stirnfläche (15) hin offene Kanäle (44, 47; 42, 46) verlaufen, die in einer Einbaulage der Buchse (88) über deren Ausnehmungen (95) miteinander verbunden und in der anderen Einbaulage durch einen Schnursteg (105, 107) der Rundschnurdichtung (94) voneinander getrennt sind.

13. Wegeventil nach Anspruch 12, dadurch gekennzeichnet, daß an einer Stirnseite (15) des Gehäuses (11) auf dem Durchmesser zwei voneinander getrennte Kanal-Paare (42, 46 bzw. 44, 47) diametral zueinander angeordnet sind und eine Auslaß-Öffnung (48) zwischen beiden Kanal-Paaren angeordnet ist.

14. Wegeventil nach Anspruch 13, dadurch gekennzeichnet, daß auf der anderen Stirnseite (17) des Gehäuses (11) auf dem Durchmesser zwei als Viertelkreis ausgebildete Kanäle (52, 54) verlaufen, zwischen denen eine Auslaß-Öffnung (55) angeordnet ist.

15. Wegeventil nach einem der Ansprüche 10 bis 14, dadurch gekennzeichnet, daß die Rundschnurdichtung (94) sinen Flachsteg (108) aufweist, der der Unterbrechung des inneren Schnurringes (103) diametral gegenüber liegt und der zusammen mit Erhebungen (111) an der Buchse (88) eine seitenrichtige Lage der Rundschnurdichtung (94) in beiden Montagelagen ergibt.

16. Wegeventil nach einem der Ansprüche 10 bis 15, dadurch gekennzeichnet, daß dis Schnurringe (103, 104) durch vier Schnurstege (105 bis 108) voneinander im Abstand gehalten werden, von denen jeweils zwei Paare (105, 107 bzw. 106, 108) sich diametral einander gegenüberliegen und daß diese Paare (105, 107 bzw. 106, 108) unsymmetrisch zu einer durch den Flachsteg (109) verlaufenden Symmetrieebene liegen.

17. Wegeventil nach einem der Ansprüche 13 bis 16, dadurch gekennzeichnet, daß die in die eine Stirnfläche (15) des Gehäuses (11) führenden drei Längskanäle (41, 43, 45) als Längsbohrungen und die damit verbundenen, in der Stirnfläche offenen Kanäle (42, 44, 46) als Bogennuten ausgebildet sind, wobei die Längsbohrungen (41, 43, 45) auf den Ecken eines Rechtecks liegen und von denen die der Grundfläche (16) des Gehäuses (11) nächstliegende Längsbohrung (45) mit dem ersten Steueranschluß (26) verbunden ist.

18. Wegsventil nach Anspruch 1, dadurch gekennzeichnet, daß die Buchse (117) hülsenförmig ausgsbildet ist und eine am Deckel (87) sich abstützende Feder (118) mit Druckstück (119) aufnimmt.

## Claims

1. Directional control valve having a longitudinally moveable control slide (13) in a housing (11), it being possible to feed the impulses which actuate the control slide (13) of the directional control valve according to different methods of operation,

- and in which the housing (77) has longitudinal channels (41, 43, 45, 51, 55) which lead into end faces (15, 17) of the housing (71),

- and the end faces (15, 17) are covered by covers (16, 18) which have several cover channels (95, 96, 99),

- and having at least one drive piston (89) which is located coaxially to the control slide (13) and is guided in a sleeve (88),

- as well as having sealing elements (94) which are located between the housing end faces (15,

17) and the covers (16, 18), via the penetrations of which sealing elements (94) control connections can be made between the longitudinal channels (41, 43, 45, 51, 53) in the housing (11) and the cover channels (95, 96, 99), characterised in that:
- the sleeve (88) accommodating the drive piston (89) is made of plastic and is arranged in the cover (87),
- the sleeve (88), on its periphery, has a flange (91) which sits against the end face (15, 17) of the housing (11), in which flange (91), on the side facing towards the housing (11), are located at least one recess (95) and an opening (96) of the cover channels, of which the an is in connection with a pressure chamber (97) which is arranged in the sleeve (88),
- in the housing, the longitudinal channels (41, 43, 45, 51, 53) are connected to open groove-shaped channels (42, 44, 46, 52, 54) running in the end faces (15, 17),
- these open channels (42, 44, 46, 52, 54) as well as the recess (95) and the opening (96) are arranged in the sleeve (88) on the same diameter,
- and the sealing element is a toroidal sealing ring (94) which is made symmetrically such that it makes possible two assembly positions by different installation into the sleeve (88).

2. Directional control valve according to Claim 1, characterised in that the sleeve (88) is made essentially in a cup shape and the control channel (96) opens close to a base (98) into the pressure chamber (97) defined by the sleeve (88).

3. Directional control valve according to Claim 1 or 2, characterised in that the opening of the control channel (96) and the recess (95) in the flange (97) are arranged essentially diametrically to the longitudinal axis of the sleeve (88).

4. Direction control valve according to one of Claims 1 to 3, characterised in that grooves (93) containing the toroidal sealing ring (94) are arranged in the flange (97) on the side facing towards the housing (71).

5. Directional control valve according to one of Claims 1 to 4, characterised in that the sleeve (88), because of an isometric design (102), has only one defined installation position in the cover (87).

6. Directional control valve according to one of Claims 1 to 5, characterised in that the cover (87) is made in a cup shape and is supported with its free edge (92) on the flange (91) on the side facing away from the housing (17).

7. Directional control valve according to one of Claims 1 to 6, characterised in that a central receptacle for a restoring spring (118) is made in the cover (87).

8. Directional control valve according to one of Claims 1 to 7, characterised in that the cover (87) is made symmetrically such that it makes possible two assembly positions on the housing (11).

9. Directional control valve according to one of Claims 1 to 5, characterised in that the sleeve (88), on the side facing towards the housing (15), has a longitudinal groove (99) for venting which is in connection with the sealing area of the toroidal sealing ring (94).

10. Directional control valve according to one or more of the preceding claims, characterised in that the toroidal sealing ring (94) consists essentially of two concentric cord rings (103, 104) which are connected to one another by radial webs (105 to 109) and of which the inner cord ring (103) is interrupted at one location for controlling venting.

11. Directional control valve according to Claim 10, characterised in that the inner cord ring (103) encircles the sleeve (88) on its outside diameter and the distance between the cord rings (103, 104) is selected such that the openings and recesses (47 - 48, 95, 96) in the sleeve (88) and the housing end face (15), which openings and recesses are located on the same diameter are located in sealed manner between them or are in connection with one another in suitable manner.

12. Directional control valve according to Claim 10 or 11, characterised in that at least two channels (44, 47; 42, 46) which are separated from one another by a material web and are open towards the end face (15) run in the end face (15) of the housing (11) on the same diameter, are connected to one another in one installation . position of the sleeve (88) via their recesses (95) and are separated from one another in the other installation position by a cord web (105, 107) of the toroidal sealing ring (94).

13. Directional control valve according to Claim 12, characterised in that two channel pairs (42, 46 and 44, 47) which are separated from one another are arranged diametrically to one another on the end face (15) of the housing (11) on the same diameter and an outlet opening (48) is arranged between the two channel pairs.

14. Directional control valve according to Claim 13, characterised in that two channels (52, 54) made as a quadrant run on the other end face (17) of the housing (11) on the same diameter, between which channels (52, 54) is arranged an outlet opening (55).

15. Directional control valve according to one of Claims 10 to 14, characterised in that the toroidal sealing ring (94) has a flat web (108) which lies diametrically opposite the interruption of the inner cord ring (103) and which, together with projections (111) on the sleeve (88), results in a two-two side position of the toroidal sealing ring (94) in both assembly positions.

16. Directional control valve according to one of Claims 10 to 15, characterised in that the cord rings (103, 104) are held at a distance from one another by four cord webs (105 - 108), of which in each case two pairs (105, 107 and 106, 108) lie diametrically opposite one another, and that these pairs (105, 107, and 106, 108) lie unsymmetrically to a plane of symmetry running through the flat web (109).

17. Directional control valve according to one of Claims 13 - 16, characterised in that the three longitudinal channels (41, 43, 45) leading into one end face (15) of the housing (11) are made as longitudinal bores and the channels (42, 44, 46) connected to the longitudinal bores and open in the end face are made as curved grooves, with the longitudinal bores (41, 43, 45) being located at the corners of a rectangle, of which the longitudinal bore (45) nearest to the base surface (16) of the housing (17) is connected to the first control connection (26).

18. Directional control valve according to Claim 1, characterised in that the sleeve (117) is made in a shell shape and accommodates a spring (118) which is supported on the cover (87) and has a thrust piece (119).

**Revendications**

1.- Distributeur avec un tiroir de commande (13) susceptible de se déplacer longitudinalement dans un boîtier (11), les impulsions qui actionnent ce tiroir de commande (13 du distributeur pouvant être acheminées selon différents modes de fonctionnement, distributeur dans lequel:
- le boîtier (11) comporte des canaux longitudinaux (41, 43, 45, 51, 53) qui aboutissent aux surfaces frontales (15, 17) du boîtier (11)
- cas surfaces frontales (15, 17) sont recouvertes pax des couvercles (16, 18) comportant plusieurs canaux de couvercles (95, 96, 99),
- il est prévu au moins un piston d'entraînement (89) placé coaxialement par rapport au tiroir de commande (13) et qui est guidé dans une douille (88),
- ainsi que des éléments d'étanchement (94) placés entre les surfaces frontales (15, 17) du boîtier et les couvercles (16, 18), das liaisons de commande étant susceptibles d'être réalisées entre les canaux longitudinaux (41, 43, 45, 51, 53) dans le boîtier (11) et les canaux de couvercles (95, 96, 99) par l'intermédiaire d'ajours de ces éléments d'étanchement,
distributeur caractérisé en ce que:
- la douille (88) dans laquelle est logé le piston d'entraînement (89) est constituée de matière plastique et disposée dans le couvercle (87),
- la douille (88) comporte à sa périphérie une collerette (91) s'appliquant sur la surface frontale (15, 17) du boîtier (11), tandis qu'il est prévu, sur le côté tourné vers le boîtier (11) de cette collerette, au moins un évidement (95) et un orifice (96) des canaux de couvercle, cet orifice étant en communication avac une chambre de pression (97) située dans la douille (88),
- les canaux longitudinaux (41, 43, 45, 51 53) dans le boîtier (11) sont reliés à des canaux (42, 44, 46, 52, 54) ouverts en forme de gorges dans les surfaces frontales (15 17),
- ces canaux ouvertes (42, 44, 46, 52, 54) ainsi que l'évidement (95) et l'orifice (96) sont disposés dans la douille (88) en étant placés sur le même diamètre,
- l'élément d'étanchement est un joint d'étanchéité en cordon da forme annulaire (94), qui est réalisé de façon symétrique afin de permettre, par une installation différente dans la douille (88), deux positions de montage.

2.- Distributeur selon la revendication 1, caractérisé en ce que la douille (88) est essentiellement en forme de godet et le canal de commande (96) débouche au voisinage d'un fond (98) dans la chambre de pression (97) délimitée par la douille (88),

3.- Distributeur selon la revendication 1 ou 2, caractérisé en ce que l'orifice de canal de commande (96) et l'évidement (95) dans la collerette (91) sont disposés en pratique diamètralement par rapport à l'axe longitudinal de la douille (88).

4.- Distributeur selon une des revendications 1 à 3, caractérisé en ce que sur le côté, tourné vers le boîtier (11) de la collerette (91), sont ménagées des gorges (93) maintenant le joint d'étanchéité en cordon (94).

5.- Distributeur selon une des revendications 1 à 4, caractérisé en ce que la douille (88), du fait de sa conformation assymétrique (102), ne comporte qu'une position de montage définie dans le couvercle (87).

6.- Distributeur selon une des revendications 1 à 5, caractérisé en ce que le couvercle (87) est en forme de godet, et son bord libre (92) prend appui sur la collerette (91) sur la face de cette collerette opposéa au boîtier (11).

7.- Distributeur selon une des revendications 1 à 6, caractérisé en ce qu'un logement central est ménagé dans le couvercle (87) pour un ressort de rappel (118)

8.- Distributeur selon une des revendications 1 à 7, caractérisé en ce que le couvercle (87) est conformé de façon symétrique afin de permettre deux positions de montage sur le boîtier (11).

9.- Distributeur selon une des revendications 1 à 5, caractérisé en ce que la douille (88) comporte, sur sa face tournée vers le boîtier (15), une rainure longitudinale (99) pour la désaération, cette rainure étant en communication avec la zone d'étanchement du joint d'étanchéité en cordon (94).

10.- Distributeur selon une ou plusieurs des précédentes revendications, caractérisé en ce que le joint d'étanchéité en cordon (94) est en pratique constitué de deux anneaux toriques concentriques (103, 104) qui sont reliés l'un à l'autre par des barrettes radiales (105 à 109), l'anneau torique interne (103) étant interrompu en un emplacement pour commander une désaération.

11.- Distributeur selon la revendication 10, caractérisé en ce que l'anneau torique interne (103) entoure la douille (88) sur son diamètre externe et que la distance entre les anneaux toriques (103, 104) est choisie de façon que les orifices et les évidements (41 à 48, 95, 96) dans la douille (88) et la face frontale (15) du boîtier, sa situent entre eux en étant étanchés ou bien ont, d'une façon appropriée une communication entre eux.

12.- Distributeur selon la revendication 10 ou 11, caractérisé en ce qu'au moins deux canaux (44, 47; 42, 46) ouverts vers la face frontale (15) s'étendent sur le diamètre, étant séparés l'un de l'autre par une barrette da matériau, ces canaux, dans une position da montage de la douille (88), étant reliés l'un à l'autre par l'intermediaire d'évidements (95) de cette douille, tandis que dans l'autre position de montage, ils sont séparés l'un de l'autre par une barrette (105, 107) du joint d'étanchéité en cordon (94).

13. Distributeur selon la revendication 12, caractérisé en ce que, sur l'une (15) des faces frontales du boîtier (11), deux paires de canaux séparées l'une de l'autre (42, 46 ou bien 44, 47) sont disposées diamètralement l'une par rapport à l'autre tandis qu'un orifice d'échappament (48) est disposé entre les deux paires de canaux.

14.- Distributeur selon la revendication 13, caractérisé ean ce que, sur l'autre face frontale (17) du boîtier (11), deux canaux en forme de quarts de cercle (52, 54) s'étendent sur le diamètre et qu'un orifice d'échappement (55) est disposé entre eux.

15.- Distributeur selon une des revendications 10 à 14, caractérisé en ce que le joint d'étanchéité en cordon (94) comporte une barrette plate (108) placée diamètralament par rapport à l'interruption de l'anneau torique interne (103) et qui, en corrélation avec des saillies (111) sur la douille (88), assure une position de montage latéralement correcte du joint d'étanchéité en cordon (94) dans les daux positions de montage.

16.- Distributeur selon l'une das revendications 10 à 15, caractérisé en ce que les anneaux toriques (103, 104) sont maintenus à une certaine distance l'un de l'autre par quatre barrettes (105 à 108) dont deux paires (104, 107 ou bien 106, 108) se situent diamètralement l'une par rapport à l'autre, ces paires (105, 107 ou bien 106, 108) étant situées de façon assymétrique par rapport à un plan de symétrie passant par la barrette plate (109).

17.- Distributeur selon une des revendications 13 à 16, caractérisé en ce que les trois canaux longitudinaux (41, 43, 45) aboutissant à l'une (15) des surfaces frontales du boîtier (11) sont réalisés sous la forme de perçages longitudinaux, et les canaux (42, 44, 46), en liaison avec eux, ouverts dans cette surface frontale, sont réalisés sous la forme de gorges en arc, les perçages longitudinaux (41, 43, 45) se situant aux coins d'un rectangle, et parmi eux, le perçage longitudinal (45) le plus proche de la surface de base (16) du boîtier (11) est relié au premier raccordement de commande (26).

18. Distributeur selon la revendication 1, caractérisé en ce que la douille (117) est en forme de manchon et reçoit, avec une piece de pression (119), un ressort (118) prenant appui sur le couvercle (87).

Fig.1

Fig.2

Fig.3

Fig.4

Fig.5

Fig.6

Fig.7

0 093 360

Fig.8

Fig.12

Fig.9

Fig.10

Fig.11

Fig.13

Fig.14

Fig.15

Fig.16

Fig.17

Fig.19

Fig.18

Fig.20

Fig.21

Fig.21'

Fig.22

Fig.23

Fig.24

Fig.25

9